# EUROPÄISCHE PATENTSCHRIFT

(11) **EP 3 865 548 B1**
(45) Veröffentlichungstag und Bekanntmachung des Hinweises auf die Patenterteilung: **24.08.2022**
(21) Anmeldenummer: 21155169.2
(22) Anmeldetag: 04.02.2021
(51) Int. Cl.: C09D 11/03, C09D 11/38, C09D 7/00, C09D 1/00

(54) **LÖSEMITTELFREIE ZUSAMMENSETZUNG BASIEREND AUF 2,4,7,9-TETRAMETHYL-5-DECIN-4,7-DIOL**
SOLVENTLESS COMPOSITION BASED ON 2,4,7,9-TETRAMETHYL-5-DECIN-4,7-DIOL
COMPOSITION SANS SOLVANT À BASE DE 2,4,7,9-TETRAMÉTHYL-5-DÉCINE-4,7-DIOL

(30) Priorität: 14.02.2020 EP 20157331
(43) Veröffentlichungstag der Anmeldung: 18.08.2021
(73) Patentinhaber: Evonik Operations GmbH, 45128 Essen (DE)
(72) Erfinder: Reinartz, Roger, 5685 JG Best (NL); Peck, Kenneth Michael, Emmaus, PA 18049 (US); Hinrichs, Petra, 44866 Bochum (DE)
(74) Vertreter: Evonik Patent Association

(56) Entgegenhaltungen:
- EP-A1- 0 618 000
- US-A1- 2003 125 393
- US-B2- 7 018 963

## Beschreibung

Die Erfindung betrifft eine lösemittelfreie Zusammensetzung basierend auf 2,4,7,9-Tetramethyl-5-decin-4,7-diol, ihre Verwendung und ihre Herstellung, um die Oberflächenspannung in wässrigen und lösemittelhaltigen Systemen zu verringern.

Die Fähigkeit die Oberflächenspannung zu verringern, ist in Anwendungen von Formulierungen auf Wasserbasis von großer Bedeutung, weil verringerte Oberflächenspannung sich in verbesserter Substratbenetzung auswirkt. Beispiele derartiger Zusammensetzungen auf Wasserbasis umfassen Beschichtungen, Tinten, Feuchtmittel, Reinigungszusammensetzungen und landwirtschaftliche Formulierungen. Eine Oberflächenspannungsreduktion in Systemen auf Wasserbasis wird im Allgemeinen durch die Zugabe von oberflächenaktiven Substanzen erreicht, resultierend in verbesserter Oberflächenbenetzung, geringeren Defekten und besserem Verlauf. Die Reduzierung der statischen Oberflächenspannung ist wichtig, wenn das System sich in Ruhe befindet. Die dynamische Oberflächenspannung liefert ein Maß für die Fähigkeit einer oberflächenaktiven Substanz, sich an neu geschaffenen Oberflächen zu orientieren.

Oberflächenaktive Additive, basierend auf acetylenischen Glykolen, wie 2,4,7,9-Tetramethyl-5-decin-4,7-diol, sind für ihre gute statische und dynamische Oberflächenspannungsreduktionsfähigkeiten mit wenigen der negativen Merkmale herkömmlicher nicht-ionischer und anionischer oberflächenaktiver Additive bekannt.

Das Additiv 2,4,7,9-Tetramethyl-5-decin-4,7-diol ist ein wachsartiger Feststoff mit geringer Wasserlöslichkeit, Flüchtigkeit und ist beispielsweise unter dem Markennamen SURFYNOL^{®} 104 (Fa. Evonik) erhältlich. Bevor das Additiv als z.B. Netzmittel eingesetzt werden kann, muss es daher geschmolzen und/oder zusätzlich in der bevorzugten Einsatzkonzentration von ca. 50 % in einem organischen Lösemittel gelöst werden. Diese zusätzlichen Arbeitsschritte bedeuten für den Anwender in der Lackindustrie mehr Aufwand und Kosten.

Um diese zusätzlichen Arbeitsschritte zu vermeiden, gibt es bereits Produkte auf dem Markt, bei denen das 2,4,7,9-Tetramethyl-5-decin-4,7-diol in geeigneten organischen Lösemitteln, wie z.B. 2-Ethylhexanol, 2-Butoxyethanol, Dipropylenglykolmonomethylether, Ethylenglykol, Propylenglykol oder 2-Propanol, in der gewünschten Lösungskonzentration von 50 % oder 75 % gelöst sind. Bekannte Marken sind hierbei z.B. Surfynol^{®} 104 A oder SURFYNOL^{®} 104 E.

Für die Nutzung von organischen Lösemitteln in Beschichtungszusammensetzungen oder Formulierungen sind zukünftig deutliche Einschränkungen zu erwarten. Diese ergeben sich unter anderem aus verschiedenen nationalen und internationalen Richtlinien (EU-Decopaint-Richtlinie 2004/42/CE) zur Begrenzung von VOC-Emissionen (eng.: volatile organic compound = deutsch: flüchtige organische Verbindungen) aus Beschichtungsstoffen und zur Reduzierung des Gesundheitsrisikos des Verarbeiters und Nutzers durch flüchtige und schwerflüchtige Verbindungen (VOC und SVOC) (siehe Forderungen des Ausschusses für die gesundheitliche Bewertung von Bauprodukten = AgBB) oder die Zertifizierung von Gebäuden gemäß der Deutschen Gesellschaft für Nachhaltiges Bauen e.V. (DGNB) oder der Leadership in Energy & Environmental Design (LEED).

Die US 7,018,963 offenbart Vergleichsversuche einer wasserlöslichen Netzmittelzusammensetzung bestehend aus einem 2,4,7,9-Tetramethyl-5-decin-4,7-diol und einem Alkoholalkoxylat oder ethoxyliertem 2,4,7,9-Tetramethyl-5-decin-4,7-diol mit einem Alkoholalkoxylat und Ethylenglykol (Tabelle 1), ohne Angaben der Lagerstabilitäten.

Es ist daher Aufgabe der Erfindung, eine Zusammensetzung u.a. als Netzmittel und/oder Entschäumer bereitzustellen, die im Wesentlichen frei von flüchtigen organischen Verbindungen gegenüber vergleichbaren Zusammensetzungen und lagerstabil ist.

Zur Lösung der Aufgabe wird daher eine lösemittelfreie Zusammensetzung enthaltend folgende Komponente
- 2,4,7,9-Tetramethyl-5-decin-4,7-diol,
- dessen Ethoxylate und
- Polyethylenglykole,
wobei diese Wasser enthält und die Konzentration an 2,4,7,9-Tetramethyl-5-decin-4,7-diol größer als 40 Gew.-% bezogen auf die Zusammensetzung ist,
vorgeschlagen.

Lösemittelfrei im Sinne dieser Erfindung bedeutet, dass keine Lösemittel eingesetzt werden, die flüchtige organische Verbindungen gemäß den Anforderungen der EU-Decopaint-Richtlinie 2004/42/CE aufweisen.

Vorzugsweise enthält die erfindungsgemäße Zusammensetzung keine organischen Lösemittel, wie z.B. 2-Ethylhexanol, 2-Butoxyethanol, Dipropylenglykolmonomethylether, Ethylenglykol, Propylenglykol oder 2-Propanol.

Überraschenderweise konnte somit 2,4,7,9-Tetramethyl-5-decin-4,7-diol in Wasser gelöst werden, so dass auf die Verwendung von organischen Lösemitteln verzichtet werden konnte.

Völlig unerwartet zeigt die erfindungsgemäße Zusammensetzung bei Lagerstabilitätsversuchen auch unter extremen Temperaturschwankungen nach dem Auftauen keine Phasenseparation. Etwaige entstandene Kristalle während den Lagerstabilitätsversuchen können leicht, d.h. ohne hohe Scherkräfte und/oder Erwärmung, wieder eingearbeitet werden.

Vorzugsweise weist die erfindungsgemäße Zusammensetzung eine Konzentration an 2,4,7,9-Tetramethyl-5-decin-4,7-diol nicht größer als 80 Gew.-%, bevorzugt nicht größer als 70 Gew.- %, besonders bevorzugt nicht größer als 60 Gew.-%, bezogen auf die Zusammensetzung, auf.

Es war auch völlig unerwartet, dass diese Konzentration an 2,4,7,9-Tetramethyl-5-decin-4,7-diol eingestellt werden konnte. Der Anwender kann ohne seine Rezeptur zu ändern, die erfindungsgemäße lösemittelfreie Zusammensetzung einsetzen.

Vorzugsweise weisen die Polyethylenglykole eine Molmasse von 200 g/mol - 1000 g/mol, bevorzugt 300 g/mol - 800 g/mol, besonders bevorzugt 400 g/mol - 600 g/mol auf.

Vorzugsweise weist die erfindungsgemäße Zusammensetzung Ethoxylate des 2,4,7,9-Tetramethyl-5-decin-4,7-diols 1 bis 10, bevorzugt 3 bis 10 Mol Ethylenoxid auf. Diese sind beispielsweise unter den Produktnamen SURFYNOL^{®} 465, SURFYNOL^{®} 440 oder SURFYNOL^{®} 420 (Fa. Evonik) bekannt.

Die ethoxylierten Derivate bzw. Ethoxylate des 2,4,7,9-Tetramethyl-5-decin-4,7-diols werden hierbei als Synonyme verwendet.

Nach einer bevorzugten Ausführungsform der erfindungsgemäße Zusammensetzung weist sie
- 40 - 80 Gew.-%, bevorzugt 41 - 70 Gew.-%, besonders bevorzugt 42 - 60 Gew.-% 2,4,7,9-Tetramethyl-5-decin-4,7-diol,
- 0,5 - 15 Gew.-%, bevorzugt 1,0 - 10,0 Gew.-%, besonders bevorzugt 2,0 - 8,0 Gew.-% Ethoxylate des 2,4,7,9-Tetramethyl-5-decin-4,7-diol,
- 35 - 55 Gew.-%, bevorzugt 38 - 50 Gew.-%, besonders bevorzugt 40 - 45 Gew.-% Polyethylenglykole und
- 1,0 - 15 Gew.-%, bevorzugt 2,0 - 12,0 Gew.-%, besonders bevorzugt 3,0 - 10,0 Gew.-% Wasser, auf,
wobei sich die Mengenangaben der Komponenten auf 100 Gew.-% ergänzen und sich auf die Zusammensetzung beziehen.

Ein weiterer Gegenstand der Erfindung ist vorzugsweise die Verwendung der erfindungsgemäßen Zusammensetzung als Netzmittel, als Entschäumer oder als Dispergierhilfsmittel in Beschichtungszusammensetzungen.

Beschichtungszusammensetzungen können im Bereich der Lacke, Farbe und Tinten eingesetzt werden.

Bevorzugt kann die erfindungsgemäße Zusammensetzung in Formulierungen von Agrar-, Baustoff-, Pflanzenschutz-, Textilveredlungs-, Hydrophobierungs-, Galvanikhilfsmittel, Latex-Tauchprozessen, Metallbearbeitungsflüssigkeiten und Leiterplattenbeschichtungen eingesetzt werden.

Auch ist das Verfahren zur Herstellung der Zusammensetzung Gegenstand der Erfindung mit folgenden Schritten:
a. Bereitstellen eines Polyethylenglykols,
b. Zugabe von Wasser,
c. Hinzufügen von Ethoxylaten des 2,4,7,9-Tetramethyl-5-decin-4,7-diols,
d. Hinzufügen von geschmolzenem 2,4,7,9-Tetramethyl-5-decin-4,7-diol.

Es konnte festgestellt werden, dass durch Einhalten dieser Schritte das 2,4,7,9-Tetramethyl-5-decin-4,7-diol besser eingearbeitet werden konnte, ohne dass durch Anhaften desselbigen beispielsweise am Gefäß eine Reduzierung der Konzentration in der erfindungsgemäßen Zusammensetzung zu befürchten ist. Im Hinblick auf die großtechnische Herstellung der erfindungsgemäßen Zusammensetzung würde die Reduzierung des 2,4,7,9-Tetramethyl-5-decin-4,7-diols viel schwerwiegender als im Labormaßstab ausfallen.

Die erfindungsgemäße Zusammensetzung stellt somit viele Vorteile bereit. Sie ist lagerstabil und in wässrigen Formulierungen und Wasser leicht einarbeitbar. Daraus hergestellte Systeme besitzen eine niedrige Oberflächenspannung und weisen ein verringertes Schaumverhalten auf.

Hinsichtlich der Freiheit von Lösemitteln, die flüchtige organische Verbindungen aufweisen, stellt die erfindungsgemäße Zusammensetzung eine VOC-reduzierte und/oder quasi VOCfreie Zusammensetzung dar.

Die folgenden Beispiele dienen dem Fachmann allein zur Erläuterung dieser Erfindung und stellen keinerlei Beschränkung des beanspruchten Gegenstands oder des beanspruchten Verfahrens dar.

### Geräte

- Umluftofen der Firma Binder
- Dissolver / Zahnradscheibe der Firma VMA Getzmann, Typ CA20M1

### 1. Herstellung der Zusammensetzungen

Zunächst wurde das SURFYNOL^{®} 104 (Fa. Evonik) in einem Umluftofen bei 60°C geschmolzen. Das PEG 400 (Fa. Dow) wurde in einem 180ml Kunststoffbecher vorgelegt. Das Wasser wurde langsam unter Rühren bei 500 Umdrehungen pro Minute (Upm) zugegeben und mit einer Zahnradscheibe (Ø 4 cm) eingerührt und 5 Minuten nachgerührt. Unter Rühren wurde anschließend das SURFYNOL^{®} 440 (Fa. Evonik) zugegeben und abschließend das zuvor geschmolzene SURFYNOL^{®} 104. Die Zusammensetzung wurde für weitere 15 Minuten bei 500 Upm nachgerührt.

Die Gew.-% der Komponente sind aus Tabelle 1 ersichtlich.

### 2. Lagerstabilitätsversuchen

Es wurden diverse Versuche durchgeführt, um die Lagerstabilität der erfindungsgemäßen Zusammensetzung zu überprüfen. Hierbei wurden verschiedene Bedingungen simuliert, die bei der Lagerung der Zusammensetzung vorherrschen könnten.

### 2a) Bei Raumtemperatur

Die hergestellten Zusammensetzungen wurden nach einem Tag und nach einer Woche bei Raumtemperatur visuell beurteilt. In Tabelle 1 können die visuellen Ergebnisse entnommen werden.
- Erfindungsgemäße Zusammensetzungen Z1 und Z2 waren nach einem Tag und nach einer Woche klar und flüssig.
- Vergleichszusammensetzungen VZ1 und VZ2 zeigen die geringe Löslichkeit von SURFYNOL^{®} 104 in Wasser auf, was aus dem Stand der Technik bekannt ist.
- Vergleichszusammensetzungen VZ3 - VZ6 zeigen auf, dass SURFYNOL^{®} 104 in einer Konzentration von > 40 Gew.-% in PEG 400 nicht löslich ist.
- Vergleichszusammensetzungen VZ7 und VZ8 konnten durch Einsatz von Wasser in einem flüssigen Zustand überführt werden. Jedoch zeigte VZ8 nach einer Woche eine Phasenseparation und ist zudem teilweise fest. VZ7 schien auch ohne Zugabe von SURFYNOL^{®} 440 lagerstabil zu sein, was jedoch durch weitere Versuche widerlegt wurden (siehe unten).

### 2b) Bei -5°C über 1 - 4 Tage mit anschließendem 5-stündigem Auftauen

Die hergestellten Zusammensetzungen wurden bei -5°C gelagert und jeweils nach einem Tag visuell beurteilt und dann nach dem 4. Tag 5 Stunden (h) aufgetaut und abschließend beurteilt. Die Ergebnisse sind in Tabelle 2 aufgeführt.

Für diesen Versuch wurden lediglich die VZ1, VZ2, VZ7 und Z1, Z2 ausgewählt, da sie unter "milden" Bedingungen, wie unter 2a) beschrieben, als geeignet betrachtet wurden. Die übrigen Vergleichszusammensetzungen kamen nicht mehr in Frage, da sie nicht lagerstabil waren.

Hier zeigte sich, dass VZ7 eine Temperatur von -5°C über einem kurzen Zeitraum (4 Tage) nicht stabil war.

Die erfindungsgemäßen Zusammensetzungen Z1 und Z2 sowie VZ1 waren unter diesen Bedingungen stabil.

### 2c) Unter Extrembedingungen

Die hergestellten Zusammensetzungen wurden 4 Tage in einem Zyklus 16 Stunden bei -20°C gelagert und anschließend 8 Stunden bei Raumtemperatur (RT) aufgetaut. Nach jedem Schritt wurden sie visuell begutachtet. Die Ergebnisse sind in Tabelle 3 aufgezeigt.

Die gleichen Zusammensetzungen wie unter 2b) wurden für diesen Versuch ausgewählt.

Es hat sich gezeigt, dass die erfindungsgemäßen Zusammensetzungen Z1 und Z2 auch unter diesen extremen Bedingungen stabil sind. Bei VZ1 müsste der Anwender die Zusammensetzung auftauen. Die Wartezeit des Auftauens muss bei den erfindungsgemäßen Zusammensetzungen nicht eingehalten werden. Somit spart der Anwender Zeit und daher auch Kosten.

**Tabelle 1**

| | | | | | **Nach 1 Tag** | **Nach 1 Woche** |
|---|---|---|---|---|---|---|
| **Zusammensetzungen** | **SURFYNOL^{®} 104** | **PEG 400** | **Wasser** | **SURFYNOL^{®}** 440 | **Visuelle Beurteilung** | **Visuelle Beurteilung** |
| VZ1 | 0,1 | | 99.9 | | klar, Öltröpfchen an der Oberfläche | klar, flüssig |
| VZ2 | 1 | | 99 | | klar, flüssig, Klumpen an der Oberfläche | klar, flüssig, Klumpen an der Oberfläche |
| VZ3 | 40 | 60 | | | fest | fest |
| VZ4 | 45 | 55 | | | teilweise fest, Phasenseparation | teilweise fest, Phasenseparation |
| VZ5 | 50 | 50 | | | fest | fest |
| VZ6 | 75 | 25 | | | fest | fest |
| VZ7 | 50 | 40 | 10 | | klar, flüssig | klar, flüssig |
| VZ8 | 50 | 30 | 20 | | flüssig, Phasenseparation | teilweise fest, Phasenseparation |
| Z1 | 45 | 40 | 10 | 5 | klar, flüssig | klar, flüssig |
| Z2 | 50 | 36 | 9 | 5 | klar, flüssig | klar, flüssig |

**Tabelle 2**

| **Zusammensetzungen** | **1. Tag / -5°C** | **2. Tage / -5°C** | **3. Tage / -5°C** | **4. Tage/ -5°C** | **4. Tage, nach Auftauen / 5h** |
|---|---|---|---|---|---|
| VZ1 | flüssig, kleine Klumpen | fest | fest | fest | klar, flüssig |
| VZ2 | flüssig, größere Klumpen | fest | fest | fest | trüb, flüssig |
| VZ7 | flüssig, etwas Kristallbildung | Zunahme der Kristallbildung im Laufe der Zeit | | | slushy, Kristallbildung; Kristalle konnten nicht wieder durch leichtes Rühren bei Raumtemperatur eingearbeitet werden |
| Z1 | flüssig, klar | flüssig, klar, leichte Zunahme der Kristallbildung im Laufe der Zeit | | | flüssig, klar, ein paar Kristalle auf der Oberfläche; durch leichtes Rühren bei Raumtemperatur wieder einarbeitbar |
| Z2 | flüssig, klar | | | | flüssig, klar, ein paar Kristalle auf der Oberfläche; durch leichtes Rühren bei Raumtemperatur wieder einarbeitbar |

**Tabelle 3**

| | **1. Tag** | | **2. Tag** | | | **3. Tag** | **4. Tag** | |
|---|---|---|---|---|---|---|---|---|
| | **16h / -20°C** | **8h / RT** | **16h / -20°C** | **8h / RT** | **16h / -20°C** | **8h / RT** | **16h - 20°C** | **8h / RT** |
| VZ1 | fest | klar, flüssig | fest | klar, flüssig | fest | klar, flüssig | fest | klar, flüssig |
| VZ2 | fest | klar, flüssig Klumpen an der Oberfläche | fest | klar, flüssig, Klumpen an der Oberfläche | fest | flüssig, Phasenseparation Klumpen | fest | flüssig, Phasenseparation, Klumpen |
| VZ7 | klar, flüssig | flüssig, Kristallbildung | fest | flüssig, Kristallbildung höher als am 1. Tag | fest | flüssig, Kristallbildung höher als am 2. Tag | fest | Phasenseparation, Kristalle konnten nicht durch leichtes Rühren bei Raumtemperatur eingearbeitet werden |
| Z1 | klar, flüssig | klar, flüssig | klar, flüssig | klar, flüssig | klar, flüssig | klar, flüssig | klar, flüssig | klar, flüssig |
| Z2 | klar, flüssig | klar, flüssig | klar, flüssig | klar, flüssig | klar, flüssig | klar, flüssig | klar, flüssig | klar, flüssig |

## Patentansprüche

1. Lösemittelfreie Zusammensetzung enthaltend folgende Komponente
- 2,4,7,9-Tetramethyl-5-decin-4,7-diol,
- dessen Ethoxylate und
- Polyethylenglykole,
**dadurch gekennzeichnet, dass** sie Wasser enthält und die Konzentration an 2,4,7,9-Tetramethyl-5-decin-4,7-diol größer ist als 40 Gew.-%, bezogen auf die Zusammensetzung.

2. Zusammensetzung nach Anspruch 1, **dadurch gekennzeichnet, dass** die Zusammensetzung keine organische Lösemittel enthält.

3. Zusammensetzung nach einem der vorgenannten Ansprüche, **dadurch gekennzeichnet, dass** die Konzentration an 2,4,7,9-Tetramethyl-5-decin-4,7-diol nicht größer als 80 Gew.-%, bevorzugt nicht größer als 70 Gew.-%, besonders bevorzugt nicht größer als 60 Gew.-%, bezogen auf die Zusammensetzung, ist.

4. Zusammensetzung nach einem der vorgenannten Ansprüche, **dadurch gekennzeichnet, dass** die Polyethylenglykole eine Molmasse von 200 g/mol - 1000 g/mol, bevorzugt 300 g/mol - 800 g/mol, besonders bevorzugt 400 g/mol - 600 g/mol aufweisen.

5. Zusammensetzung nach einem der vorgenannten Ansprüche, **dadurch gekennzeichnet, dass** die Ethoxylate des 2,4,7,9-Tetramethyl-5-decin-4,7-diol 1 bis 10 Mol, bevorzugt 3 bis 10 Mol Ethylenoxid aufweisen.

6. Zusammensetzung nach einem der vorgenannten Ansprüche, **dadurch gekennzeichnet, dass** sie
- 40 - 80 Gew.-%, bevorzugt 41 - 70 Gew.-%, besonders bevorzugt 42 - 60 Gew.-% 2,4,7,9-Tetramethyl-5-decin-4,7-diol,
- 0,5 - 15 Gew.-%, bevorzugt 1,0 - 10,0 Gew.-%, besonders bevorzugt 2,0 - 8,0 Gew.-% Ethoxylate des 2,4,7,9-Tetramethyl-5-decin-4,7-diol,
- 35 - 55 Gew.-%, bevorzugt 38 - 50 Gew.-%, besonders bevorzugt 40 - 45 Gew.-% Polyethylenglykole und
- 1,0 - 15 Gew.-%, bevorzugt 2,0 - 12,0 Gew.-%, besonders bevorzugt 3,0 - 10,0 Gew.-%Wasser, aufweist,
wobei sich die Mengenangaben der Komponenten auf 100 Gew.-% ergänzen und sich auf die Zusammensetzung beziehen.

7. Verwendung einer Zusammensetzung nach einem der vorgenannten Ansprüche als Netzmittel, als Entschäumer oder als Dispergierhilfsmittel in Beschichtungszusammensetzungen.

8. Verwendung einer Zusammensetzung nach einem der vorgenannten Ansprüche in Formulierungen von Lacken, Farben, Tinten, Agrar-, Baustoff-, Pflanzenschutz-Textilveredlungs-, Hydrophobierungs-, Galvanikhilfsmittel, Latex-Tauchprozessen, Metallbearbeitungsflüssigkeiten und Leiterplattenbeschichtungen.

9. Verfahren zur Herstellung der Zusammensetzung nach einem der Ansprüche 1 - 6 gemäß folgende Schritte:
a. Bereitstellen eines Polyethylenglykols,
b. Zugabe von Wasser,
c. Hinzufügen von Ethoxylaten des 2,4,7,9-Tetramethyl-5-decin-4,7-diol,
d. Hinzufügen von geschmolzenem 2,4,7,9-Tetramethyl-5-decin-4,7-diol.

## Claims

1. Solvent-free composition comprising the following components
- 2,4,7,9-tetramethyl-5-decyne-4,7-diol,
- ethoxylates thereof and
- polyethylene glycols,
**characterized in that** said composition comprises water and the concentration of 2,4,7,9-tetramethyl-5-decyne-4,7-diol is greater than 40% by weight, based on the composition.

2. Composition according to Claim 1, **characterized in that** the composition does not comprise any organic solvent.

3. Composition according to either of the preceding claims, **characterized in that** the concentration of 2,4,7,9-tetramethyl-5-decyne-4,7-diol is not greater than 80% by weight, preferably not greater than 70% by weight, particularly preferably not greater than 60% by weight, based on the composition.

4. Composition according to any of the preceding claims, **characterized in that** the polyethylene glycols have a molar mass of 200 g/mol - 1000 g/mol, preferably 300 g/mol - 800 g/mol, particularly preferably 400 g/mol - 600 g/mol.

5. Composition according to any of the preceding claims, **characterized in that** the ethoxylates of 2,4,7,9-tetramethyl-5-decyne-4,7-diol comprise 1 to 10 mol, preferably 3 to 10 mol, of ethylene oxide.

6. Composition according to any of the preceding claims, **characterized in that** said composition comprises
- 40 - 80% by weight, preferably 41 - 70% by weight, particularly preferably 42 - 60% by weight, 2,4,7,9-tetramethyl-5-decyne-4,7-diol,
- 0.5 - 15% by weight, preferably 1.0 - 10.0% by weight, particularly preferably 2.0 - 8.0% by weight, ethoxylates of 2,4,7,9-tetramethyl-5-decyne-4,7-diol,
- 35 - 55% by weight, preferably 38 - 50% by weight, particularly preferably 40 - 45% by weight, polyethylene glycols and
- 1.0 - 15% by weight, preferably 2.0 - 12.0% by weight, particularly preferably 3.0 - 10.0% by weight, water,
wherein the stated amounts of the components add up to 100% by weight and are based on the composition.

7. Use of a composition according to any of the preceding claims as a wetting agent, as a defoamer or as a dispersing aid in coating compositions.

8. Use of a composition according to any of the preceding claims in formulations of lacquers, paints, inks, aids in the fields of agriculture, construction materials, plant protection, textile finishing, hydrophobizing and electroplating, latex dipping processes, metalworking fluids and printed circuit board coatings.

9. Process for producing the composition according to any of Claims 1 - 6, comprising the following steps:
a. providing a polyethylene glycol,
b. adding water,
c. adding ethoxylates of 2,4,7,9-tetramethyl-5-decyne-4,7-diol,
d. adding molten 2,4,7,9-tetramethyl-5-decyne-4,7-diol.

## Revendications

1. Composition sans solvant contenant les composants suivants
- du 2,4,7,9-tétraméthyl-5-décyn-4,7-diol,
- des produits d'éthoxylation de celui-ci et
- des polyéthylèneglycols,
**caractérisée en ce qu'**elle contient de l'eau et que la concentration du 2,4,7,9-tétraméthyl-5-décyn-4,7-diol est supérieure à 40 % en poids par rapport à la composition.

2. Composition selon la revendication 1, **caractérisée en ce que** la composition ne contient pas de solvants organiques.

3. Composition selon l'une des revendications précédentes, **caractérisée en ce que** la concentration du 2,4,7,9-tétraméthyl-5-décyn-4,7-diol n'est pas supérieure à 80 % en poids, de préférence n'est pas supérieure à 70 % en poids, d'une manière particulièrement préférée n'est pas supérieure à 60 % en poids, par rapport à la composition.

4. Composition selon l'une des revendications précédentes, **caractérisée en ce que** les polyéthylèneglycols ont une masse molaire de 200 g/mol à 1 000 g/mol, de préférence de 300 g/mol à 800 g/mol, d'une manière particulièrement préférée de 400 g/mol à 600 g/mol.

5. Composition selon l'une des revendications précédentes, **caractérisée en ce que** les produits d'éthoxylation du 2,4,7,9-tétraméthyl-5-décyn-4,7-diol comportent 1 à 10 moles, de préférence 3 à 10 moles d'oxyde d'éthylène.

6. Composition selon l'une des revendications précédentes, **caractérisée en ce qu'**elle comprend
- 40 à 80 % en poids, de préférence 41 à 70 % en poids, d'une manière particulièrement préférée 42 à 60 % en poids de 2,4,7,9-tétraméthyl-5-décyn-4,7-diol,
- 0,5 à 15 % en poids, de préférence 1,0 à 10,0 % en poids, d'une manière particulièrement préférée 2,0 à 8,0 % en poids de produits d'éthoxylation du 2,4,7,9-tétraméthyl-5-décyn-4,7-diol,
- 35 à 55 % en poids, de préférence 38 à 50 % en poids, d'une manière particulièrement préférée 40 à 45 % en poids de polyéthylèneglycols et
- 1,0 à 15 % en poids, de préférence 2,0 à 12,0 % en poids, d'une manière particulièrement préférée 3,0 à 10,0 % en poids d'eau,
les indications de quantité des composants faisant en tout 100 % en poids, et se rapportant à la composition.

7. Utilisation d'une composition selon l'une des revendications précédentes comme mouillant, comme antimoussant ou comme auxiliaire de dispersion dans des compositions de revêtement.

8. Utilisation d'une composition selon l'une des revendications précédentes dans des formulations de vernis, de peinture, d'encres, d'adjuvants agricoles, pour la construction, phytosanitaires, d'apprêtage de textile, d'hydrophobisation, de galvanoplastie, de procédés au trempé pour latex, de liquides pour l'usinage des métaux et de revêtements de cartes imprimées.

9. Procédé de fabrication de la composition selon l'une des revendications 1 à 6, selon les étapes suivantes :
a. fourniture d'un polyéthylèneglycol,
b. addition d'eau,
c. adjonction de produits d'éthoxylation du 2,4,7,9-tétraméthyl-5-décyn-4,7-diol,
d. adjonction de 2,4,7,9-tétraméthyl-5-décyn-4,7-diol fondu.
